# EUROPÄISCHE PATENTANMELDUNG

(11) **EP 1 328 108 A1**
(43) Veröffentlichungstag der Anmeldung: **16.07.2003**
(21) Anmeldenummer: 02360028.1
(22) Anmeldetag: 14.01.2002
(51) Int. Cl.: H04M 3/42, G06F 17/60

(54) **Verfahren, Endgerät, Server und Programmmodule zur Nutzung von Diensten an einem Endgerät**

(71) Anmelder: ALCATEL, 75008 Paris (FR)
(72) Erfinder: Gesek, Georg, 2485 Wampersdorf (AT)
(74) Vertreter: Rausch, Gabriele, Dr.

(57) **Zusammenfassung**

Die vorliegende Erfindung betrifft ein Verfahren zur Nutzung von Diensten (S1-S8) an einem Endgerät (TER1, TER3), an dem Dienste über eine Bedienschnittstelle (UI) abrufbar sind, sowie ein Endgerät (TER1, TER3), ein Endgerätemodul (PRMT), einen Server (PFS) und ein Servermodul (PRMS) hierfür.

Bei dem Verfahren wird mindestens eine nutzerspezifische Präferenz (P1-P8) für einen Dienst (S1-S8) ermittelt und mindestens einem Abfragekriterium (R1-R8) für den Dienst (S1-S8) zugeordnet. Zum Abrufen des mindestens einen Dienstes (S1-S8) wird eine Bedienfunktion (BF1-BF3) an der Bedienschnittstelle (UI) des Endgeräts (TER1, TER3) in Abhängigkeit von mindestens einem situationsabhängigen Parameter (PTI1-PTI4, PL1, PL2, PL2a) angeboten. Bei Aktivierung der Bedienfunktion (BF1-BF3) wird der Dienst (S1-S8) an der Bedienschnittstelle (UI) anhand des jeweiligen Abfragekriteriums (R1-R8) abgerufen.

## Beschreibung

Die vorliegende Erfindung betrifft ein Verfahren zur Nutzung von Diensten an einem Endgerät, an dem Dienste über eine Bedienschnittstelle abrufbar sind, sowie ein Endgerät, ein Endgerätemodul, einen Server und ein Servermodul hierfür.

In zunehmendem Maße werden Dienste für Nutzer von Endgeräten, insbesondere von Kommunikations-Endgeräten, angeboten. Beispielsweise können mit einem Personal Computer oder einem Mobiltelefon Informationen aus dem Internet abgerufen oder EMails verschickt werden, können Einkauflisten erstellt oder empfangen werden oder günstige Verkaufsangebote übermittelt werden, kann bargeldlos bezahlt werden und dergleichen mehr. Jedenfalls wird die Nutzung der vielfältigen Dienste immer schwieriger, wenn nicht gar in vielen Fällen unmöglich, da die Nutzer die Übersicht über das Angebot von Diensten verlieren. Selbst wenn sich ein Nutzer nur einiger weniger Dienste bedient, muss er sich eigene Hilfsmittel anlegen, um die Diensten bedienbar zu machen. Beispielsweise kann sich der Nutzer Icons für von ihm bevorzugte Dienste auf einer graphischen Bedienoberfläche anlegen oder eine Lesezeichenliste (Link-Liste) für einen Internet-Browser manuell erstellen. Jedenfalls ist dieses Verfahren für den Nutzer kompliziert und unbequem.

Auf dem Gebiet des sogenannten "Electronic-Commerce" (E-Commerce), also dem Vermarkten von Waren und Dienstleistungen über das Internet gibt es zum Teil schon Ansätze, das Warenangebot nutzerspezifisch zu gestalten. Dabei werden die das jeweilige Warenangebot enthaltenden Internetseiten so "maßgeschneidert", dass der Nutzer ein nach seinen Hauptinteressen gegliedertes Warenangebot angeboten bekommt.

In der WO 01/27782 A1 ist ein Verfahren beschrieben, bei dem an personenbezogene Empfehlungen für einen Internet-Browser eines Endgeräts eines Nutzers durch einen "Personalisierungs-Server" bereitgestellt werden. Der sendet der Browser nutzerspezifische Informationen, insbesondere eine den Nutzer identifizierende Nutzerkennung, an den Server. Anhand dieser Daten sowie anhand weiterer, über den Nutzer bereits früher gesammelter Informationen, beispielsweise über von dem Nutzer besuchten und somit möglicherweise auch bevorzugten/präferierten Internet-Seiten, werden Empfehlungen zusammengestellt und dem Nutzer angeboten. Beispielsweise werden Links zu empfohlenen Internet-Seiten, also Abfragekriterien für Dienste, zusammengestellt und als Liste an den Internet-Browser im Endgerät des Nutzers übermittelt.

Aus Datenschutz-Gründen ist dabei problematisch, dass nutzerspezifische Informationen im Netz, d.h. bei dem Personalisierungs-Server, gespeichert werden. Ferner beruhen die Empfehlungen lediglich auf einem früheren Nutzerverhalten, beispielsweise auf früher von diesem präferierten Internet-Seiten. Die jeweils aktuellen Bedürfnisse oder Präferenzen des Nutzers werden nicht berücksichtigt.

Es ist daher eine Aufgabe der Erfindung, Dienste an einer Bedienschnittstelle eines Endgeräts optimal an die jeweiligen Bedürfnisse oder Präferenzen des Endgeräte-Nutzers angepasst zum Abruf bereitzustellen.

Diese Aufgabe wird durch ein Verfahren zur Nutzung von Diensten gemäß der technischen Lehre des Anspruchs 1 gelöst. Zur Lösung der Aufgabe sind ferner ein Endgerät, ein Endgerätemodul, ein Server sowie ein Servermodul gemäß weiterer unabhängiger Ansprüche vorgesehen.

Der Erfindung liegt dabei der Gedanke zugrunde, dass eine oder mehrere nutzerspezifische Präferenzen für einen Dienst oder mehrere Dienste ermittelt und jeweils einem oder mehreren Abfragekriterien für den jeweiligen Dienst zugeordnet werden. Für die Präferenzen wird eine Bedienfunktion an der Bedienschnittstelle des Endgeräts in Abhängigkeit von mindestens einem situationsabhängigen Parameter angeboten. Bei dem situationsabhängigen Parameter handelt es sich beispielsweise um eine Zeitinformation über die jeweils aktuelle Zeit oder eine Ortsinformation über den jeweils aktuellen Aufenthaltsort des Endgeräts. Jedenfalls wird beim Anbieten der Präferenzen berücksichtigt, in welcher Situation sich das Endgerät und somit dessen Nutzer momentan befindet, beispielsweise morgens zu Hause, mittags in einem Restaurant, zu einer beliebigen Tageszeit in einem Einkaufscenter, nachmittags im Büro, nachmittags oder abends in der Nähe eines Fernsehgerätes oder dergleichen. Den oder die Dienst(e) kann der Nutzer durch Aktivierung der Bedienfunktion an der Bedienschnittstelle abrufen. Bei dem Abrufen wird das jeweilige Abfragekriterium verwendet. Ein Abfragekriterium ist beispielsweise ein Link zu einer Internet-Seite, ein Startbefehl für ein beim Endgerät und/oder bei einem separaten, das Endgerät bedienenden Server gespeicherten Programm, ein Zugriffsbefehl auf beim Endgerät oder bei einer separaten Speichereinrichtung, z. B. einer Datenbank, gespeicherte Daten oder dergleichen. Ein Abfragekriterium kann auch zur Abfrage von Daten aus einer Datenbank erforderliche Selektionskriterien enthalten.

Die Erfindung kann vorteilhaft beispielsweise bei Internet-Portalen, Telekommunikations-Diensten, Bezahldiensten, Banken, Einkaufszentren oder sonstigen Dienstleistungs-Einrichtungen angewendet werden, wo sie die jeweiligen Dienste leichter bedienbar macht. Ferner wird der Zugriff auf die Dienste durch das Endgerät beschleunigt. Durch den erleichterten und beschleunigten Zugriff auf die Dienste werden sie häufiger genutzt. Es ist auch möglich, dass ein Dienst erst bei Anwendung der Erfindung überhaupt genutzt wird, da er an der Bedienschnittstelle bevorzugt angeboten wird und/oder leichter bedienbar ist.

Die Erfindung kann z. B. durch ein erfindungsgemäß ausgestaltetes Endgerät alleine und/oder in Interaktion mit einem erfindungsgemäßen Server, der beispielsweise zu einem Telekommunikationsnetz gehört, ausgeführt werden. Beispielsweise können ein Telekommunikations-Endgerät, z. B. ein Mobilfunk- oder Festnetz-Endgerät, ein ortsfester oder tragbarer Computer, z. B. ein sogenannter Personal Computer bzw. PDA (Portable Digital Assistant), Video und Audio-Geräte oder dergleichen mittels der Erfindung eine komfortable, nutzerorientierte Bedienschnittstelle bereitstellen.

Es können aber auch z. B. ein bekanntes Endgerät oder ein konventioneller Server mit einem erfindungsgemäßen Endgerätemodul bzw. Servermodul, d.h. mit einer geeigneten Software und/oder Hardware, ausgestattet werden, so dass sie die erfindungsgemäßen Funktionen ausführen können. Ferner kann ein erfindungsgemäßer Server den erfindungsgemäßen Bedienkomfort für ein konventionelles Endgerät bereitstellen.

Weitere vorteilhafte Wirkungen der Erfindung ergeben sich aus den abhängigen Ansprüchen und der Beschreibung.

Neben einer Zeitinformation und/oder einer Ortsinformation über den jeweils aktuellen Aufenthaltsort des Endgeräts kann der situationsabhängige Parameter auch andere und/oder weitere Informationen umfassen, beispielsweise ein von dem Endgerät situationsabhängig lokal empfangbares Identifikationssignal, z. B. ein lokal gesendetes Funksignal oder GPS-Signal (Global Positioning System), ein von dem Endgerät lokal erfasstes Umgebungsgeräusch, auf das Endgerät einwirkendes Licht, die jeweilige Umgebungstemperatur beim Endgerät oder dergleichen. Die jeweilige Situation des Endgeräts und somit indirekt auch die jeweilige Situation des Nutzers kann bereits durch einen einzigen der vorgenannten Parameter eindeutig ermittelbar sein. Es ist aber auch möglich, dass hierzu eine Kombination aus mehreren der vorgenannten Parameter durch das Endgerät ausgewertet wird.

Zur Ermittlung der mindestens einen nutzerspezifischen Präferenz kommen verschiedene Möglichkeiten in Frage: beispielsweise kann die Präferenz anhand eines an der Bedienschnittstelle eingegebenen Abrufbefehls zum Abrufen des mindestens einen Dienstes, z. B. die Nutzung eines oder mehrerer Internet-Links, ermittelt werden. Ferner können durch das Endgerät z. B. bei einem separaten Server angeforderte Daten und/oder bei einem Speicher des Endgeräts abgefragte Daten ausgewertet werden. Dabei können beispielsweise Schlüsselwörter, Adressen oder dergleichen aus den Daten herausgefiltert werden. Beispielsweise kann ermittelt werden, ob die Daten ein Hobby des Nutzers und/oder von diesem bevorzugte Konsumgüter betreffen, z. B. eine bestimmte Sportart bzw. bestimmte Speisen und Getränke. Auch die Häufigkeit, mit der ein Dienst abgerufen wird, eignet sich zweckmäßigerweise zur Ermittlung der mindestens einen nutzerspezifischen Präferenz. Das erfindungsgemäße Endgerät und/oder der erfindungsgemäße Server filtern sozusagen die Abrufbefehle, angeforderten Daten oder dergleichen zur Ermittlung von nutzerspezifischen Präferenzen.

Besonders vorteilhaft in Bezug auf das spätere Anbieten der Bedienfunktion gemäß der jeweiligen Nutzer-Präferenz ist es, wenn zur Ermittlung der Präferenz und/oder im Zusammenhang mit der Ermittlung der mindestens einen Präferenz die jeweilige Situation des Endgeräts bei der Anforderung oder Nutzung des Dienstes ausgewertet wird. Beispielsweise wird zweckmäßigerweise der jeweilige Zeitpunkt ermittelt, zu dem ein Dienst abgerufen wird, und/oder der jeweilige Ort, an dem ein Dienst abgerufen wird. Wenn das Endgerät und somit der Nutzer sich wieder in einer derartigen Situation befinden, erinnert sich das Endgerät sozusagen wieder an die Präferenzen des Nutzers in der vorherigen Situation und bietet eine Bedienfunktion an der Bedienschnittstelle an, mit der diese Präferenzen bequem wieder aktivierbar sind. Wenn der Nutzer beispielsweise öfter abends eine Internet-Seite besucht, in der z. B. das abendliche Fernseh-Programm angezeigt wird, bietet das Endgerät abends einen Link zu dieser Internet-Seite als "Präferenz-Bedienfunktion" an, wohingegen dieser Link tagsüber nicht oder an nachrangiger Stelle an der Bedienschnittstelle angezeigt wird.

Die Bedienfunktion kann in vielfältiger Weise angeboten werden: beispielsweise kann sie über einen Bedienknopf ("Button") aktivierbar sein. Der Bedienknopf kann z. B. eine spezifische Taste auf einer Tastatur des Endgeräts sein und/oder eine graphische Darstellung eines Knopfes auf einer graphischen Bedienschnittstelle (GUI = Graphical User Interface) des Endgeräts. Mit dem Bedienknopf können je nach Situation des Endgeräts, also z. B. Zeit, Ort oder sonstige Umgebungsbedingen, verschiedene Präferenzen bzw. Abfragekriterien für Dienste verknüpft sein, die den Nutzer sozusagen "durch das Leben führen". Durch einfachen Druck auf den Bedienknopf steht dann die vom Nutzer in der jeweiligen Situation bevorzugte Präferenz bzw. der bevorzugte Dienst zur Verfügung. Man könnte einen derartigen Bedienknopf auch als "Life Guide Button" bezeichnen.

Auf einer graphischen Bedienschnittstelle kann auch ein sonstiges Bediensymbol zur Aktivierung der Bedienfunktion angeboten werden. Ferner kann die Bedienschnittstelle ein Bedienmenü für die Bedienfunktion enthalten. Bei Aktivierung des Bedienmenüs zeigt die Bedienschnittstelle beispielsweise eine Auswahlliste, aus der die Präferenzen des Nutzers auswählbar sind.

Die Bedienfunktion ist vorteilhafterweise dynamisch, d.h. sie wird in Abhängigkeit der jeweiligen Situation, in der sich das Endgerät / der Nutzer befindet, aktualisiert. Beispielsweise wird die in der jeweiligen Situation wichtigste Präferenz am Kopf einer Auswahlliste angezeigt.

Eine Präferenz kann einem einzigen individuellen Nutzerprofil eines einzelnen Nutzers der Bedienschnittstelle zugeordnet sein. Es ist auch möglich dass die Präferenz einem übergeordneten Nutzerprofil der Bedienschnittstelle, beispielsweise einem allgemeinen Nutzerprofil zugeordnet wird, das mindestens zwei individuellen Nutzern zugeordnet ist. Die Präferenz ist dann für mehrere individuelle Nutzer nutzbar.

Eingangs wurde bereits erläutert, dass es beispielsweise aus Datenschutz-Gründen problematisch ist, wenn nutzerspezifische Informationen im Netz, z.B. bei einem Personalisierungs-Server gemäß der WO 01/27782 A1, gespeichert werden. Es stellt daher im Grunde genommen bereits eine eigenständige Erfindung dar, wenn bei einem Verfahren gemäß dem Oberbegriff des Anpruches 1 sowie bei einem entsprechenden Endgerät oder Endgerätemodul gemäß den Oberbegriffen weiterer unabhängiger Anprüche die mindestens eine Präferenz und/oder das mindestens eine Abfragekriterium in dem Endgerät und/oder auf einem von dem Endgerät entnehmbaren Speichermedium, beispielsweise einer Flash-Memory-Karte, einer Diskette, CD-ROM oder dergleichen, gespeichert wird. Das Endgerät ist dann sozusagen autark, d.h. es kann unabhängig von einem Telekommunikationsnetz Dienste an der Bedienschnittstelle des Endgeräts optimal an die jeweiligen Bedürfnisse oder Präferenzen des Endgeräte-Nutzers angepasst zum Abruf bereitstellen.

Es versteht sich, dass auch Varianten der Erfindung vorteilhaft sind, bei denen die mindestens eine Präferenz und/oder das mindestens eine Abfragekriterium bei einem oder mehreren, vom Endgerät separaten Servern abgespeichert wird. Dort können sie durch mehrere Endgeräte eines oder mehrerer Nutzer abgefragt werden. Die Präferenz bzw. das mindestens eine Abfragekriterium stehen dann beispielsweise für mehrere Endgeräte eines Nutzers zentral bereit.

Je nach Bedarf können Präferenz(en) bzw. Abfragekriterien auch teilweise beim Endgerät und teilweise beim Server gespeichert sind, wobei zweckmäßigerweise aus Datenschutz-Gründen unproblematische Daten zentral beim Server, geheimzuhaltende Daten hingegen lokal beim Endgerät oder dem aus diesem entnehmbaren Speichermedium gespeichert werden.

Bei der Ermittlung der Präferenz wird zwar vorzugsweise die Vergangenheit betrachtet, d.h. z. B. ein früheres Nutzerverhalten und/oder eine vom Nutzer individuell am Endgerät eingegebene Vorliebe für bestimmte Dienste, Themenbereiche, bevorzugte Hobbys oder dergleichen. Vorteilhafterweise wird auch ein mögliches oder wahrscheinliches zukünftiges Interesse des Endgeräte-Nutzers ermittelt. Hierfür eignet sich zweckmäßigerweise unter anderem der mindestens eine situationsabhängige Parameter. Beispielsweise wird von einer Kasseneinrichtung oder Bezahleinrichtung ein Funk- oder Infrarot-Steuersignal an das Endgerät ausgesendet, das als situationsabhängiger Parameter von dem Endgerät ausgewertet wird. Das Endgerät ermittelt anhand des Steuersignals eine wahrscheinliche Präferenz, nämlich z. B. das bargeldlose Bezahlen mit dem Endgerät und bietet eine dementsprechende Bedienfunktion an der Bedienschnittstelle an.

Das erfindungsgemäße Verfahren kann prinzipiell lokal am Endgerät angewendet werden, beispielsweise für einen komfortablen, präferenzorientierten Zugriff auf in einem Speicher des Endgeräts gespeicherten Daten und/oder zum präferenzorientierten Starten und Bedienen von durch das Endgerät ausführbaren Dienst-Programmen, z. B. Textverarbeitung, Terminplaner oder dergleichen. Vorzugsweise jedoch wird durch die Erfindung ein präferenzorientierter Zugriff auf einen oder mehrere über ein Kommunikationsnetzwerk, insbesondere über das Internet, bereitgestellte Dienste ermöglicht. Die Dienste werden beispielsweise von einem oder mehreren Servern des Kommunikationsnetzwerks erbracht, z. B. sogenannten Inhalte-Servern.

Eine Kommunikationsverbindung, mit deren Hilfe ein Dienst erbracht wird, kann im Einzelfall nur zwischen dem Endgeräts und einer einzigen von diesem separaten Einrichtung bestehen, beispielsweise der oben erwähnten Kasseneinrichtung oder Bezahleinrichtung, die interaktiv durch das Endgerät bedienbar ist. Es ist auch möglich, dass im Rahmen eines Dienstes beispielsweise Daten bei einem das Endgerät bedienenden Server über das Kommunikationsnetzwerk abgefragt werden.

Für den Fall, dass für einen Nutzer mehrere Präferenzen ermittelt werden, werden die diesen zugeordneten Bedienfunktionen zweckmäßigerweise nach einem vorbestimmten oder dynamisch ermittelten Sortierkriterium sortiert an der Bedienschnittstelle bereitstellt. Beispielsweise betrifft eine erste Präferenz das Bezahlen einer Ware an einem Bezahlsystems und eine zweite Präferenz das Anzeigen von zu beschaffende Waren an einem Display des Endgeräts. Solange sich der Nutzer des Endgeräts noch nicht in der Nähe des Bezahlsystems befindet, werden die Waren angezeigt, die Bedienfunktion für das Bezahlen hingegen befindet sich im Hintergrund der Bedienschnittstelle. Sobald sich das Endgerät jedoch in der Nähe des Bezahlsystems befindet, werden die zu beschaffenden Waren in den Hintergrund geschaltet und das Bedienfunktion für das Bezahlen in den Vordergrund das Displays geblendet. Eine andere Variante ist, mehrere Präferenzen in einer Art Auswahlliste an der Bedienschnittstelle anzuzeigen, wobei eine von dem Nutzer besonders bevorzugte Präferenz z. B. am Kopf der Liste angezeigt wird und weniger relevante Präferenzen nachrangig hinter und/oder unterhalb der besonders bevorzugten Präferenz stehen.

Im Folgenden wird die Erfindung anhand von Ausführungsbeispielen unter Zuhilfenahme der Figuren dargestellt. Es zeigen
- Figur 1: eine Anordnung mit einem erfindungsgemäßen Endgerät TER1, einem konventionellen Endgerät TER3, einem erfindungsgemäßen Server PFS und einem Dienst-Server CS,
- Figur 2: das Endgerät TER1 gemäß Figur 1 in einer schematisierten Detailansicht,

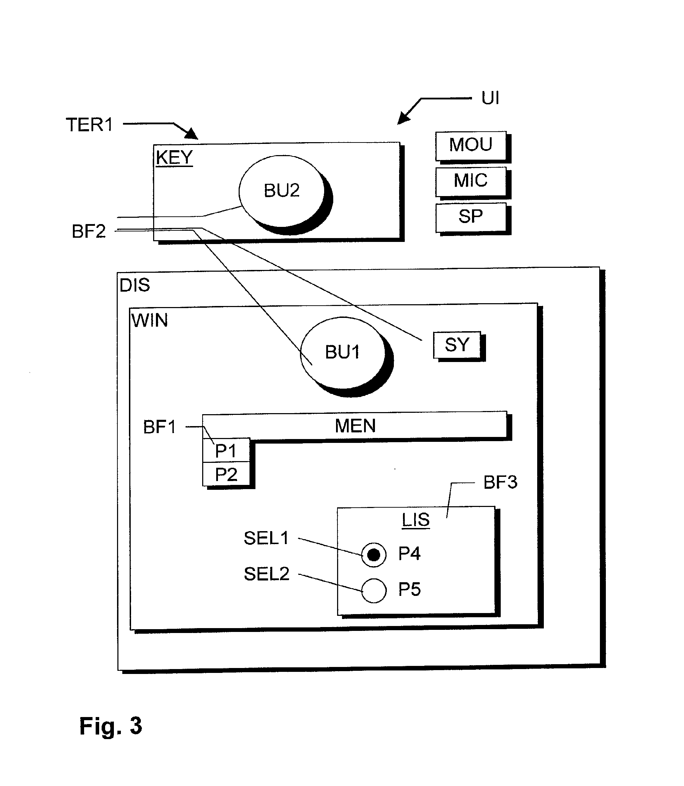

- Figur 3: eine Bedienschnittstelle U1 des Endgeräts TER1 gemäß Figuren 1 und 2,

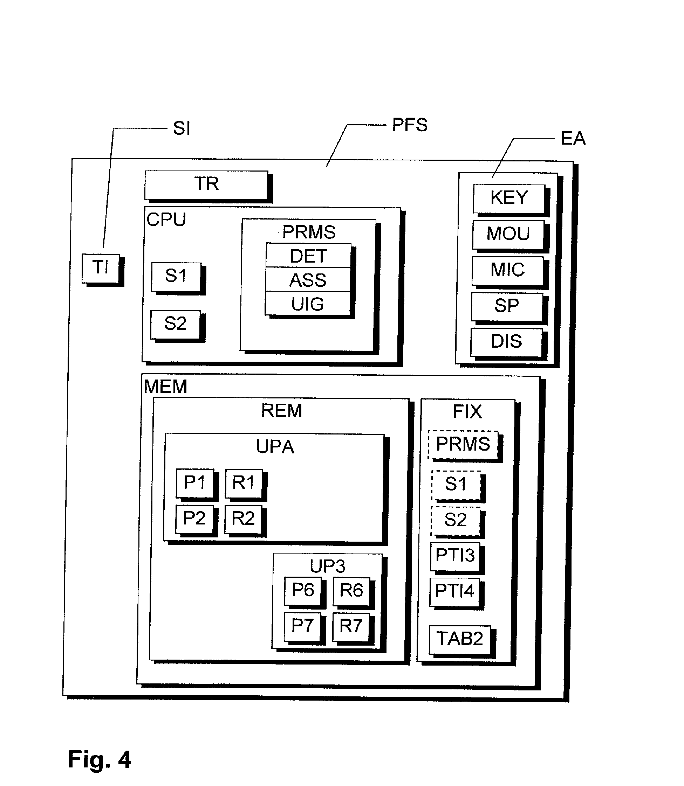

- Figur 4: eine schematisierte Detailansicht des Servers PFS gemäß Figur 1,

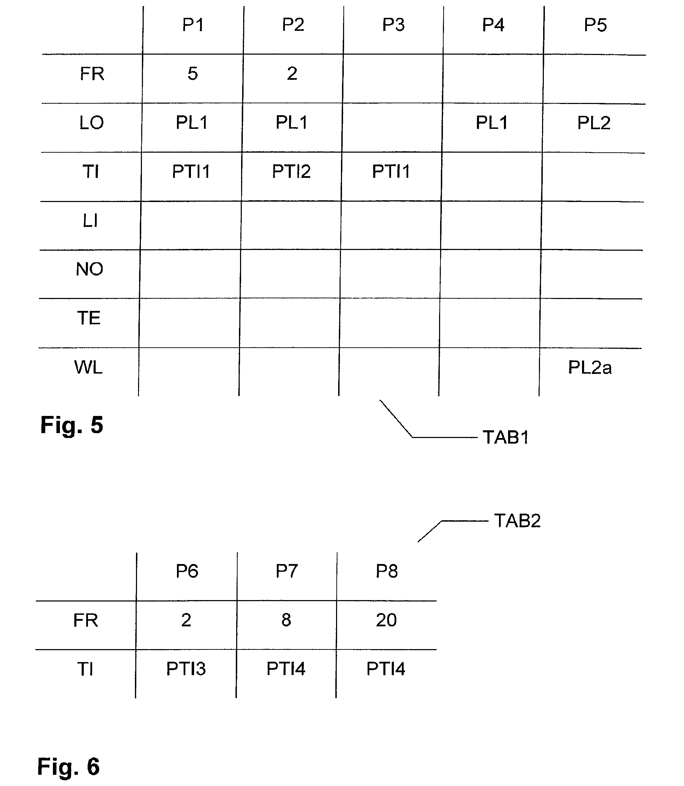

- Figur 5: eine Tabelle TAB1, die vom Endgerät TER1 gemäß Figuren 1 und 2 bei der Anwendung des erfindungsgemäßen Verfahrens erzeugt und/oder genutzt wird, und
- Figur 6: eine Tabelle TAB2, die vom Server PFS gemäß Figuren 1 und 4 bei der Anwendung des erfindungsgemäßen Verfahrens erzeugt und/oder genutzt wird.

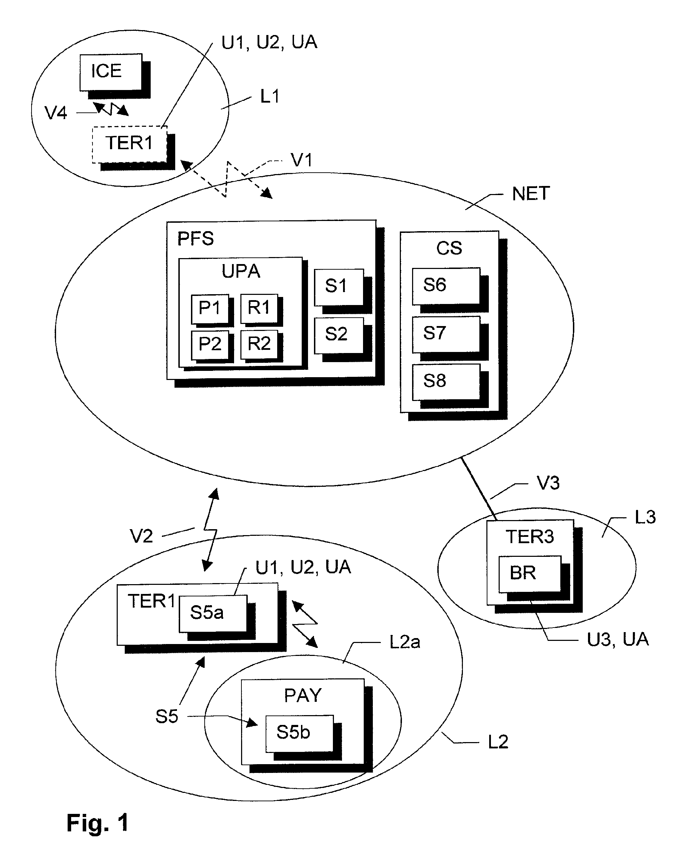

In Figur 1 ist eine beispielhafte Anordnung dargestellt, mit der die Erfindung ausgeführt werden kann. Figur 1 zeigt die Endgeräte TER1 und TER3, die mit einem Telekommunikationsnetz NET verbunden oder verbindbar sind. Das Telekommunikationsnetz NET ist oder enthält beispielsweise ein Integrated Services Digital Network (ISDN) und/oder ein Mobilfunk-Netzwerk und/oder ein Datennetzwerk, z. B. das Internet und/oder ein LAN (Lokal Area Network). Der Server PFS ermöglicht in Interaktion mit den Endgeräten TER1, TER3 eine erfindungsgemäße, nutzerorientierte Bereitstellung von Diensten an deren jeweiliger Bedienschnittstelle UI. Ferner bietet der Server PFS den Endgeräten TER1, TER3 Dienste S3, S4 an, die später noch erläutert werden. Der Dienst-Server CS stellt Dienste S6, S7, S8 bereit. Das Telekommunikationsnetz NET kann neben dem Server PFS und dem Dienst-Server CS weitere, nicht dargestellte Einrichtungen aufweisen, beispielsweise Vermittlungsstellen, Router, Switches oder dergleichen. Ferner kann das Telekommunikationsnetz NET neben den Endgeräten TER1, TER3 weitere, nicht dargestellte Endgeräte oder sonstige Telekommunikationseinrichtungen bedienen.

Die Endgeräte TER1, TER3 ermöglichen die Nutzung von Diensten S1-S8, die an deren jeweiliger Bedienschnittstelle UI abrufbar sind, wobei das Endgerät TER1 ein erfindungsgemäßes Endgerät ist, das Endgerät TER3 vorliegend ein konventionelles oder zumindest weitgehend konventionelles Endgerät. Teilweise weisen die Endgeräte TER1, TER3 identische Komponenten auf, die entsprechend mit gleichen Bezeichnungen versehen sind.

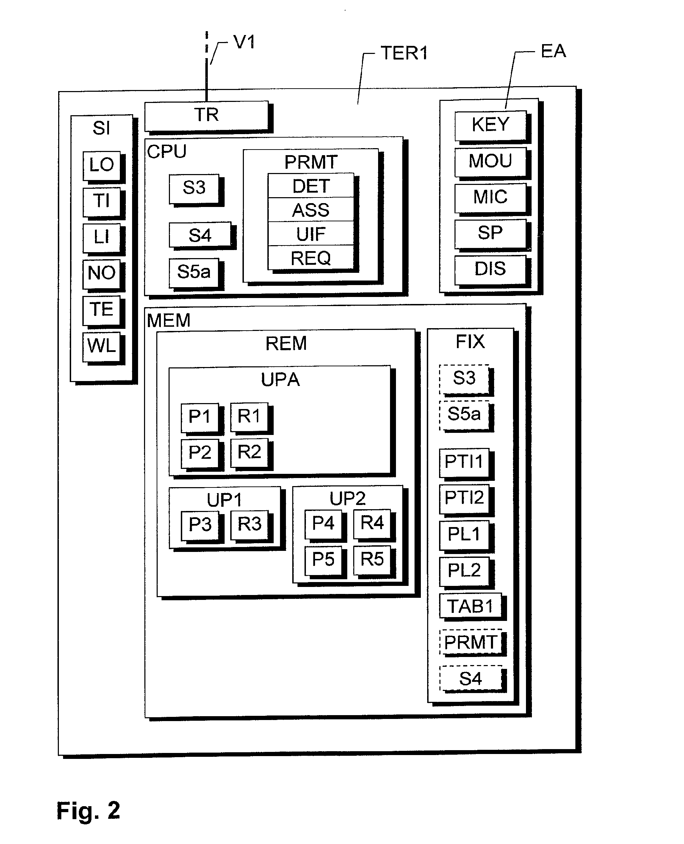

Im Folgenden wird zunächst das Endgerät TER1 anhand von Figur 2 erläutert.

Für eine komfortable, erfindungsgemäß nutzerorientierte Bereitstellung der Dienste S1-S8 sind beim Endgerät TER1 verschiedene Mittel vorgesehen, unter anderem ein erfindungsgemäßes Endgerätemodul PRMT, das von einem Steuermittel CPU, z. B. einer Prozessoranordnung, des Endgeräts TER1 ausführbaren Programmcode enthält.

Das Endgerät TER1 ist beispielsweise ein für einen Anschluss an das Internet oder ein sonstiges Datennetzwerk geeignetes Mobilfunk- oder Festnetztelefon, ein Personalcomputer oder dergleichen. Das Endgerät TER1 weist ein Verbindungsmittel TR auf, das beispielsweise ein Funk-Schnittstellenmodul, z. B. ein GSM-Modul (Global System for Mobile communication), ein Ethernet-Modul, ein Modem, einen ISDN-Adapter (ISDN = Integrated Services Digital Network), einen DSL-Adapter (DSL = Digital Subscriber Line) oder einen sonstigen Schnittstellenadapter zum Anschluss an das Telekommunikationsnetz NET enthält. Mit dem Verbindungsmittel TR kann das Endgerät TER1 eine Verbindung V1 oder V2, beispielsweise über eine Teilnehmeranschlussleitung oder eine Funk-Verbindung, zu dem Telekommunikationsnetz NET aufbauen. Weiterhin weist das Endgerät TER1 ein Steuermittel CPU sowie Speichermittel MEM auf. Das Steuermittel CPU ist beispielsweise ein Prozessor, mit dem Programm-Code von später noch erläuterten Dienst-Programm-Modulen S3, S4, S5a sowie des Endgerätemoduls PRMT ausgeführt werden kann, die in den Speichermitteln MEM gespeichert sind dort vom Steuermittel CPU abgerufen werden können.

Bei den Speichermitteln MEM handelt es sich beispielsweise um eine Festplatte, RAM-Bausteine (RAM = Random Access Memory) oder sogenannte Flash-ROM-Module (ROM = Read Only Memory). Die Speichermittel MEM enthalten vorliegend sowohl aus dem Endgerät TER1 entnehmbare Speichermedien REM, beispielsweise eine Diskette und/oder eine Speicherkarte mit elektronischem Speicher, z. B. eine sogenannte Smart-Card oder dergleichen, als auch fest in dem Endgerät TER1 installierte Speichermedien FIX, z. B. eine Festplatte oder dergleichen.

Weiterhin weist das Endgerät TER1 Ein-/Ausgabemittel EA auf, die als Ausgabemittel ein Anzeigemittel DIS und einen Lautsprecher SP enthalten sowie als Eingabemittel ein Mikrofon MIC zur Spracheingabe, eine Tastatur KEY und eine Computer-Maus MOU. Das Anzeigemittel DIS ist beispielsweise ein Computermonitor oder ein LCD-Display (Liquid Crystal Display).

Ferner weist das Endgerät TER1 Erfassungsmittel SI zum Erfassen von einem oder mehreren situationsabhängigen Parametern auf. Eine Uhr TI erfasst eine Zeitinformation PTI1, PTI2 über die jeweils aktuelle Zeit. Eine Ortserfassungseinrichtung LO, beispielsweise ein GPS-Empfänger, erfasst eine Ortsinformation PL1, PL2 über den jeweils aktuellen Aufenthaltsort L1, L2 des Endgeräts TER1. Ein Empfänger WL, beispielsweise ein Bluetooth- oder Infrarot-Empfänger dient zum situationsabhängigen, lokalen Empfangen eines Identifikationssignals PL2a. Ein Geräuschmesser NO ermittelt ein lokales Umgebungsgeräusch bei dem Endgerät TER1. Ein Lichtmesser LI erfasst die jeweilige Beleuchtungssituation beim Endgerät TER1. Der Lichtmesser LI erfasst z. B. auf das Endgerät TER1 einwirkende Lichthelligkeit, beispielsweise ob es gerade Tag oder Nacht ist, oder anhand der jeweiligen Farbtemperatur, ob sich das Endgerät TER1 in einem Gebäude oder im Freien befindet. Ein Temperaturmesser TE erfasst die jeweilige Umgebungstemperatur bei dem Endgerät TER1.

Es versteht sich, dass die Erfassungsmittel SI auch andere Komponenten zur Erfassung von einem oder mehreren situationsabhängigen Parametern aufweisen können, beispielsweise einen Empfänger für ein von einem separaten Zeitgeber gesendeten Zeitsignal, und/oder dass nur eine einzige der vorgenannten Komponenten vorhanden sein kann, z. B. der Empfänger WL.

Die Komponenten des Endgeräts TER1 sind durch nicht dargestellte interne Verbindungen untereinander verbunden.

Aus funktionaler Sicht weist der Server PFS prinzipiell einen ähnlichen oder identischen Aufbau wie das Endgerät TER1. Der Server PFS enthält ebenfalls Steuermittel CPU, Speichermittel MEM, Ein-/Ausgabemittel EA, Verbindungsmittel TR und weitere gleichnamige Komponenten wie das Endgerät TER1, die jeweils prinzipiell die gleichen Funktionen ausführen wie die gleichnamigen Komponenten des Endgeräts TER1. Im Unterschied zum Endgerät TER1 enthalten die Erfassungsmittel SI des Servers PFS allerdings nur eine Uhr TI oder eine sonstige Zeiterfassungseinrichtung zum Erfassen einer Zeitinformation PTI3, PTI4 über die jeweils aktuelle Zeit. Ferner sind anstelle der Module S3, S4, S5a, PRMT Dienst-Programm-Module S1, S2 sowie ein erfindungsgemäßes Servermodul PRMS in den Speichermitteln MEM des Servers PFS abgelegt. Das Steuermittel CPU führt den Programmcode der Dienst-Programm-Module S1, S2 sowie des Servermoduls PRMS aus.

Das Endgerät TER3 könnte prinzipiell einen ähnlichen oder identischen Aufbau wie das Endgerät TER1 aufweisen. Vorliegend jedoch ist das Endgerät TER3 ein konventionelles Endgerät, beispielsweise ein Personal Computer oder ein Mobilfunk-Endgerät, mit dem z. B. Telekommunikations- und/oder Datendienste nutzbar sind. Hierzu weist das Endgerät TER3 beispielsweise einen Browser BR auf, z. B. einen Microsoft Internet Explorer und/oder einen WAP-Browser (Wireless Application Protocol).

Das Endgerät TER1 wird von Nutzern U1, U2 sowie möglicherweise von weiteren Nutzern genutzt, die im Folgenden auch als "allgemeiner Nutzer UA" bezeichnet werden. Das Endgerät TER1 ist mobil und wird z. B. an Orten L1 und L2 benutzt. In der Zeichnung ist das Endgerät TER1 aus Vereinfachungsgründen an beiden Orten L1 und L2 eingezeichnet, wobei es selbstverständlich in der Realität nur an einem der beiden Orte L1 oder L2 sein kann. Am Ort L1 ist das Endgerät TER1 daher gestrichelt gezeichnet.

Das Endgerät TER3 ist ortsfest und über eine Verbindung V3 mit dem Telekommunikationsnetz NET verbunden. Es wird hauptsächlich von einem Nutzer U3 genutzt, teilweise aber auch von den weiteren Nutzern, z. B. dem allgemeinen Nutzer UA und/oder den Nutzern U1, U2.

In einem ersten Ausführungsbeispiel wird die Durchführung der Erfindung durch das Endgerät TER1 erläutert. Dabei wird zum leichteren Verständnis der Erfindung ein sehr vereinfachtes Vorgehen geschildert. Es versteht sich, dass die Erfindung bei Anwendung von komplexeren Methoden, beispielsweise vom sogenannter "Künstlicher Intelligenz", noch vorteilhaftere Effekte bringt.

Eine Ermittlungsfunktion DET des Endgerätemoduls PRMS ermittelt zunächst eine nutzerspezifische Präferenz P3 des Nutzers U1 für einen Dienst S3, z. B. ein Email-Programm. Der Nutzer U1 startet z. B. üblicherweise morgens das Email-Programm zur Abfrage seines Email-Postfaches bei einem Server, z. B. dem Server CS, als Dienst S3. Die Ermittlungsfunktion DET erfragt daher beispielsweise die Uhrzeit PTI1 beim Starten des Dienstes S3 bei der Uhr TI und trägt diese Uhrzeit PTI1 in der Tabelle TAB1 als situationsabhängigen Parameter ein.

Bei der Tabelle TAB1 sind für die Komponenten der Erfassungsmittel SI, nämlich die Uhr TI, die Ortserfassungseinrichtung LO, den Empfänger WL, den Geräuschmesser NO, den Lichtmesser LI und den Temperaturmesser TE, jeweils Zeilen vorgesehen, für die Präferenzen P1-P5 Spalten. Eine weitere Zeile FR ist der Häufigkeit zugeordnet, mit der ein Dienst vom Nutzer U1 genutzt wird. Die Ermittlungsfunktion DET könnte neben der Uhrzeit PTI1 auch weitere, situationsabhängige Parameter im Zusammenhang mit der Präferenz P3 in die Tabelle TAB1 eintragen, beispielsweise an welchem Ort der Dienst S3 aktiviert wird, z. B. im Büro, zu Hause oder dergleichen.

Eine Zuordnungsfunktion ASS des Endgerätemoduls PRMS ordnet die Präferenz P3 einem Abfragekriterium R3 für den Dienst S3 zu. Das Abfragekriterium R3 enthält beispielsweise einen Startbefehl und/oder einen logischen Link zum Dienst S3, mit dem vorliegend das entsprechende Email-Programm gestartet werden kann.

Eine Anbietungsfunktion UIF des Endgerätemoduls PRMS bietet eine Bedienfunktion BF2 für die Präferenz P3 zum Abrufen des Dienstes S3 an der Bedienschnittstelle UI in Abhängigkeit von dem situationsabhängigen Parameter PTI1 an. Die Anbietungsfunktion UIF ermittelt in Abhängigkeit von einem oder mehreren situationsabhängigen Parametern, vorliegend des Parameters PTI1, die jeweilige Präferenz des Nutzers U1 für einen Dienst, vorliegend für den Dienst S3, den der Nutzer U1 um die Uhrzeit gemäß dem Parameter PTI1 bevorzugt. Über die Bedienfunktion BF2 kann der Nutzer U1 den Dienst S3 bequem aktivieren. Die Bedienfunktion BF2 ist beispielsweise über eine Taste BU2 an der Tastatur KEY und/oder eine graphische Darstellung BU1 einer Taste oder ein Symbol SY im Fenster WIN aktivierbar. Die Taste BU2 kann eine fest einer erfindungsgemäßen Bedienfunktion zugeordnete Taste sein oder ein sogenannter Softkey, also eine Taste, der eine Funktion dynamisch, z. B. kontextabhängig, zuordenbar ist.

Die Bedienschnittstelle UI ist beispielsweise eine graphische Bedienschnittstelle, die ein Fenster WIN am Anzeigemittel DIS anzeigt und die Eingabebefehle z. B. von der Tastatur KEY und/oder der Maus MOU empfangen kann. Die Bedienschnittstelle UI ist beispielsweise Bestandteil eines Betriebsystems für das Endgerät TER1 und/oder Bestandteil eines durch das Endgerät TER1 ausführbaren Anwendungsprogramms, z. B. eines Internet-Browsers, beispielsweise eines Microsoft Internet-Explorers oder eines Netscape Navigators.

Ein Drücken der Taste BU2 und/oder eine Aktivierung der graphischen Darstellung BU1 oder des Symbols SY mit der Maus MOU, also eine Aktivierung der Bedienfunktion BF2, wird durch die Anbietungsfunktion UIF und/oder eine Anforderungsfunktion REQ des Endgerätemoduls PRMS erfasst. Die Anforderungsfunktion REQ ruft dann den Dienst S3 mithilfe des Abfragekriteriums R3 auf. Sie startet beispielsweise das den Dienst S3 repräsentierende Email-Programm.

Wenn die Anbietungsfunktion UIF ermittelt, dass der Parameter PTI1 nicht erfüllt ist, d.h. wenn es z. B. nachmittags oder nachts ist, stellt sie die Bedienfunktion BF2 nicht an der Bedienschnittstelle UI bereit und/oder sie ordnet der Bedienfunktion BF2 eine Präferenz für einen anderen Dienst zu. Beispielsweise kann sie der Bedienfunktion BF2 abends einer vom Nutzer U1 typischerweise getätigten Abfrage beim Server CS über das abendliche Fernsehprogramm zuordnen. Dabei können der Bedienfunktion BF2 auch mehrere Präferenzen zugeordnet sein, beispielsweise unterschiedliche vom Nutzer U1 bevorzugte Abfragen zu Fernsehprogrammen, z. B. zu Krimis oder Unterhaltungssendungen. Wenn der Nutzer U1 abends die Taste BU2 drückt, startet das Endgerätemodul PRMS bzw. das Endgerät TER1 dann jedenfalls nicht den Dienst S3, sondern sendet eine Abfrage über das abendliche Fernsehprogramm an den Server CS.

Die Präferenz P3 und das Abfragekriterium R3 sind in einem Nutzerprofil UP1 abgelegt, das dem Nutzer U1 zugeordnet ist. Zur Aktivierung des Nutzerprofils UP1 muss sich der Nutzer U1 beim Endgerät TER1 anmelden, beispielsweise durch Eingabe eines Passwortes, eines Fingerabdruckes, einer Sprachidentifizierung oder dergleichen.

Die Ermittlungsfunktion DET, die Zuordnungsfunktion ASS, die Anbietungsfunktion UIF und die Anforderungsfunktion REQ sind beispielsweise Unterfunktionen, Routinen, oder sonstige Programmteile des Endgerätemoduls PRMS. Es versteht sich, dass auch andere funktionale Gliederungen des Endgerätemoduls PRMS möglich sind. Das Endgerätemodul PRMS kann beispielsweise auch durch ein mit den obengenannten Funktionen DET, ASS, UIF, REQ versehenes Bedienschnittstellenmodul sein, beispielsweise eine Bedienschnittstelle eines Betriebssystems des Endgerätes TER1, ein Browser oder dergleichen. Das Bedienschnittstellenmodul stellt z. B. die Bedienschnittstelle UI bereit.

Ein weiteres Nutzerprofil UP2 des Endgeräts TER1 ist dem Nutzer U2 zugeordnet. Der Nutzer U2 kann das Nutzerprofil UP2 durch Einloggen beim Endgerät TER1 aktivieren. Das Nutzerprofil UP2 enthält Präferenzen P4 und P5 des Nutzers U2 für Dienste S4 und S5 und diesen Diensten zugeordnete Abfragekriterien R4 und R5.

Der Dienst S4 ist z. B. ein Datenbank-Programm, das den jeweiligen Bedarf des Nutzers U2 an zu beschaffenden Waren anzeigt. Der Nutzer U2 kann die zu beschaffenden Waren, z. B. Lebensmittel, Kleidung, Konsumgüter oder dergleichen, in eine vom Dienst S4 bereitgestellte Liste eintragen. Es ist auch möglich, dass der Dienst mit einer Bevorratungseinrichtung des Nutzers U2 zusammenarbeitet, beispielsweise einem intelligenten Kühlschrank ICE am Ort L1, der Wohnung des Nutzers U2. Der Kühlschrank ICE übermittelt die beschaffenden Lebensmittel, z. B. über das Telekommunikationsnetz NET und/oder über eine Funk- oder Infrarot-Verbindung V4 lokal am Ort L1 an den Dienst S4.

Wenn sich der Nutzer U2 mit dem Endgerät TER1 vom Ort L1, seiner Wohnung, zu einem Ort L2, z. B. einem Einkaufszentrum, bewegt, wird dies vom Endgerät TER1, genauer vom Endgerätemodul PRMT, ermittelt. Beispielsweise sendet die Ortserfassungseinrichtung LO am Ort L1 eine Ortsinformation PL1 und am Ort L2 eine Ortsinformation PL2 an das Endgerätemodul PRMT. Am Ort L2, dem Einkaufszentrum, empfängt das Endgerätemodul PRMT die Ortsinformation PL2 und blendet dementsprechend im Fernster WIN der Bedienschnittstelle UI die Bedienfunktion BF3 ein, die vorliegend eine Auswahl-Liste LIS für die Präferenzen P4 und P5 enthält.

Bei Aktivieren eines der Präferenz P4 zugeordneten Bereiches SEL1, z. B. durch einen Klick mit der Maus MOU, startet das Endgerätemodul PRMT den Dienst S4, d.h. die Liste mit zu beschaffenden Lebensmitteln wird an der Bedienschnittstelle UI angezeigt. Die Zuordnung der Präferenz P4 zur Ortsinformation PL2 wurde vom Endgerätemodul PRMT z. B. bei einem früheren Besuch des Nutzers U2 im Einkaufszentrum L2 ermittelt und in die Tabelle TAB2 eingetragen.

Wenn der Nutzer U2 seine Einkäufe getätigt hat und dementsprechend mit seinem Endgerät TER1 in die Nähe einer Bezahleinrichtung PAY im Einkaufszentrum L2 weitergeht, empfängt der Empfänger WL von der Bezahleinrichtung PAY z. B. per Funk ein lokales Identifikationssignal PL2a und übermittelt dieses dem Endgerätemodul PRMT. Das Endgerätemodul PRMT erkennt an dem Identifikationssignal PL2a, dass der Nutzer U2 wohl nun den Dienst S5 bevorzugen wird und stellt dementsprechend die Präferenz P5 an den Kopf der Auswahl-Liste LIS (in der Figur nicht dargestellt). Die Auswahl-Liste LIS wird sozusagen umsortiert. Bei Aktivieren eines der Präferenz P5 zugeordneten Bedien-Bereiches SEL2, z. B. durch einen Klick mit der Maus MOU, startet das Endgerätemodul PRMT den Dienst S5.

Der Dienst S5 ist ein interaktiver Bezahl-Dienst, bei dem ein Dienstprogramm S5a des Endgeräts TER1 mit einem Dienstprogramm S5b der Bezahleinrichtung PAY zusammenwirkt, Beispielsweise sendet das Dienstprogramm S5a dem Dienstprogramm S5b eine Liste mit den eingekauften Waren und das Dienstprogramm S5b dem Dienstprogramm S5a daraufhin den dafür zu bezahlenden Kaufpreis. Auch die anschließende vorzugsweise bargeldlose Bezahlung wird durch die Dienstprogramme S5a, S5b interaktiv abgewickelt.

Es versteht sich, dass die Bedienfunktion BF3 auch weitere, nicht dargestellte Präferenzen für nicht dargestellte Dienste enthalten kann. Beispielsweise kann eine Präferenz zur Einblendung einer Liste von Sonderangeboten am Ort L2 enthalten sein. Bei Aktivierung eines dieser Präferenz zugeordneten Bedien-Bereiches sendet das Endgerät TER1 beispielsweise eine Abfrage an einen Dienstrechner des Einkaufszentrums, welche dieser mit einer Liste von Sonderangeboten beantwortet. Die Übermittlung kann z. B. per SMS erfolgen (SMS = Short Message System).

In anderen Situationen, z. B. an einem anderen Ort, kann in der Auswahl-Liste LIS eine Präferenz für einen anderen Dienst angezeigt werden. Beispielsweise kann am Ort L1 eine Präferenz für vorbestimmte Internet-Adresse in der Liste LIS angegeben sein.

Es versteht sich, dass die Präferenzen P4, P5 auch beispielsweise einem einzigen Bedienknopf zugeordnet sein könnten, z. B. dem erwähnten "Life Guide Button". Beim Druck auf den Bedienknopf in der Nähe der Bezahleinrichtung PAY wird z. B. der Dienst S5 gestartet, ansonsten der Dienst S4.

In einem weiteren Ausführungsbeispiel werden erfindungsgemäße Funktionen durch den Server PFS und das Servermodul PRMS erbracht.

Das im Server PFS gespeicherte Nutzerprofil UPA ist ein allgemeines Nutzerprofil, das z. B. den Nutzern U1 bis U3 zugeordnet ist. Das Nutzerprofil UPA wird vom Servermodul PRMS ermittelt und erstellt. Das Nutzerprofil UPA enthält Präferenzen P1 und P2 für Dienste S1, S2, beispielsweise für bestimmte Internet-Seiten oder dergleichen, die von den Nutzern U1 bis U3 häufig und/oder in typischen Situationen, z. B. stets vom Ort L1 (= Parameter PL1) und/oder zu Zeitpunkten PTI1, PT2 besucht werden. Für die Häufigkeit FR sind beispielsweise Werte "5", "2" und "20", für den Ort LO sind Parameter PL1 und für die Zeit TI sind Parameter PTI1, PT2 in der Tabelle TAB1 bei den Präferenzen P1, P2 eingetragen. Den Präferenzen P1 und P2 sind Abfragekriterien R1 und R2 für die Dienste S1, S2 zugeordnet, beispielsweise Links zu Internet-Seiten.

Das Servermodul PRMS enthält wie das Endgerätemodul PRMT eine Ermittlungsfunktion DET und eine Zuordnungsfunktion ASS, welche prinzipiell die gleichen Funktionen leisten wie die gleichnamigen Funktionen des Endgerätemoduls PRMT. Situationsabhängige Parameter können vom Server PFS teils selbst ermittelt werden, beispielsweise eine aktuelle Zeit, teils beim jeweiligen Endgerät abgefragt werden, beispielsweise dessen aktueller Aufenthaltsort.

Anstelle der Anbietungsfunktion UIF und der Anforderungsfunktion REQ ist bei dem Servermodul PRMS eine Instruktionsfunktion UIG vorgesehen, die Instruktionen an die Endgeräte TER1, TER3 sendet, anhand derer diese Endgeräte TER1, TER3 eine zum Abrufen der Dienste S1, S2 vorgesehene Bedienfunktion BF1 für die Präferenzen P1, P2 an der Bedienschnittstelle UI in Abhängigkeit von den situationsabhängigen Parametern PTI1, PTI2, PL1 sowie vorliegend zudem in Abhängigkeit von der Häufigkeit FR anbieten kann. Bei den Instruktionen handelt es sich beispielsweise um HTML-Daten (HTML = HyperText Markup Language) zur Anzeige der Präferenzen P1, P2 als sogenannte Hyperlinks an der Bedienschnittstelle UI.

Vorliegend bildet jedoch eine Menüleiste MEN der Bedienschnittstelle UI die Bedienfunktion BF1. Die Menüleiste MEN wird gemäß den Instruktionen der Instruktionsfunktion UIG modifiziert. Beispielsweise sendet die Instruktionsfunktion UIG zum Zeitpunkt PT1 derartige Instruktionen an das Endgerät TER1, dass die Präferenz P1 als obere/erste Präferenz an der Menüleiste MEN angezeigt wird, zum Zeitpunkt PT2 hingegen derartige Instruktionen, dass die Präferenz P2 als obere/erste Präferenz an der Menüleiste MEN angezeigt wird (in der Figur nicht dargestellt). Beim Aktivieren von den Präferenz P1, P2 zugeordneten Menübereichen SEL3, SEL4 werden mittels Abfragekriterien R1, R2 die Dienste S1, S2 aktiviert, z. B. entsprechende Internet-Seiten an der Bedienschnittstelle UI angezeigt.

Das Nutzerprofil UPA ist vorliegend zentral beim Server PFS und zudem lokal beim Endgerät TER1 gespeichert. Dementsprechend kann die Bedienfunktion BF1 sowohl vom Endgerät TER1 unabhängig vom Server PFS lokal angeboten als auch vom Endgerät TER3 beim Server PFS angefordert werden. Mit anderen Worten, auch das konventionelle Endgerät TER3, z. B. ein Personal Computer, kann einen erfindungsgemäßen Dienst nutzen. Hierzu wird beispielsweise über einen Browser eine Internetseite aufgerufen, mit der das Servermodul PRMS über einen Hyperlink adressierbar ist. Dieses sendet dann z. B. HTML-Daten zur Anzeige der Präferenzen P1, P2 als sogenannte Hyperlinks an dem Browser.

Die Nutzerprofile UP1, UP2, UPA sind in dem entfernbaren Speichermedium REM abgespeichert. Das Speichermedium REM kann aus dem Endgerät TER1 entnommen und in ein anderes Endgerät eingesetzt werden, beispielsweise in das Endgerät TER3. Das jeweilige Endgerät kann die Nutzerprofile UP1, UP2, UPA dort auslesen und die oben erläuterten erfindungsgemäßen Funktionen bereitstellen.

Bei dem allgemeinen Nutzerprofil UPA handelt es sich beispielsweise um unkritische Daten, an die verhältnismäßig geringe Datenschutz-Anforderungen zu stellen sind. Anders verhält es sich mit einem persönlichen Nutzerprofil UP3 für den Nutzer U3, das ebenfalls beim Server PFS gespeichert ist und das vom Servermodul PRMS anhand mindestens eines situationsabhängigen Parameters erstellt wird. Das Nutzerprofil UP3 enthält Präferenzen P6, P7 und P8 für Dienste S6, S7 und S8, die der Server CS für das Endgerät TER erbringt und die mittels Abfragekriterien R6, R7, R8 bei diesem angefordert werden können. Durch eine geeignete Zugangsicherung, z. B. per Passwort, sind die Daten des Nutzerprofils UP3 beim Server PFS gegen unbefugten Zugriff gesichert.

Der Dienst S6 wird vom Nutzer U3 beispielsweise zu einem Zeitpunkt oder Zeitbereich PT3 präferiert, die Dienste S7 und S8 beispielsweise zu einem Zeitpunkt oder Zeitbereich PT4. Entsprechende Werte sind in der Tabelle TAB2 für die Präferenzen P6, P7, P8 eingetragen. Ferner sind Werte "2", "8" und "20" für eine Nutzungs-Häufigkeit FR der Präferenzen P6, P7, P8 bzw. der Dienste S6, S7, S8 zu den Zeitpunkten PT3, PT4 eingetragen.

Wenn der Nutzer U3 z. B. mit dem Endgerät TER1 oder TER3 das Nutzerprofil UP3 beim Servermodul PRMS zum Zeitpunkt PT3, z. B. morgens um 8 Uhr, abfragt, sendet dieses beispielsweise derartige Instruktionen, dass nur eine Bedienfunktion zur Aktivierung der Präferenz P6 bzw. des Dienstes S6 an der Bedienschnittstelle UI des Endgeräts TER1, TER3 angezeigt wird. Wenn der Nutzer diese Bedienfunktion aktiviert, wird beispielsweise das Abfragekriterium R6 an den Server CS gesendet, worauf dieser den Dienst S6 bereitstellt. Der Dienst S6 betrifft beispielsweise die Anzeige von momentanen Verspätungen öffentlicher Verkehrsmittel am Endgerät TER1, TER3.

Wenn der Nutzer U3 das Nutzerprofil UP3 hingegen zum Zeitpunkt PT4, z. B. morgens um 10 Uhr, abfragt, sendet das Servermodul PRMS beispielsweise derartige Instruktionen, dass eine Auswahlliste mit den Präferenzen P7, P8 an der Bedienschnittstelle UI des Endgeräts TER1 oder TER3 angezeigt wird. Dabei steht die Präferenz P8 im Vordergrund und/oder am Kopf der Liste, da ihr Wert für die Nutzungs-Häufigkeit FR höher ist, der ihr zugeordnete Dienst S8 vom Nutzer U3 mithin häufiger genutzt wird als der Dienst S7. Der Dienst S8 betrifft beispielsweise eine Telefon- oder Adressbuchfunktion, der Dienst S7 die Anzeige aktueller Börsenkurse am Endgerät TER1, TER3.

## Patentansprüche

1. Verfahren zur Nutzung von Diensten (S1-S8) an einem Endgerät (TER1, TER3), an dem Dienste (S1-S8) über eine Bedienschnittstelle (UI) abrufbar sind, **gekennzeichnet durch** die Schritte:
- Ermitteln mindestens einer nutzerspezifischen Präferenz (P1-P8) für einen Dienst (S1-S8),
- Zuordnen der mindestens einen Präferenz (P1-P8) zu mindestens einem Abfragekriterium (R1-R8) für den mindestens einen Dienst (S1-S8),
**gekennzeichnet durch** die Schritte:
- Anbieten einer Bedienfunktion (BF1-BF3) für die mindestens eine Präferenz (P1-P8) zum Abrufen des mindestens einen Dienstes (S1-S8) an der Bedienschnittstelle (UI) in Abhängigkeit von mindestens einem situationsabhängigen Parameter (PTI1-PTI4, PL1, PL2, PL2a), und
- bei Aktivierung der Bedienfunktion (BF1-BF3) Abrufen des mindestens einen Dienstes (S1-S8) an der Bedienschnittstelle (UI) anhand des mindestens einen Abfragekriteriums (R1-R8).

2. Verfahren nach Anspruch 1, **dadurch gekennzeichnet, dass** der mindestens eine situationsabhängige Parameter (PTI1-PTI4, PL1, PL2, PL2a) eine Zeitinformation (PTI1-PTI4) über die jeweils aktuelle Zeit und/oder eine Ortsinformation (PL1, PL2) über den jeweils aktuellen Aufenthaltsort (L1, L2, L3) des Endgeräts (TER1, TER3) und/oder ein von dem Endgerät (TER1, TER3) situationsabhängig lokal empfangbares Identifikationssignal (PL2a) und/oder ein Umgebungsgeräusch bei dem Endgerät (TER1, TER3) und/oder auf das Endgerät (TER1, TER3) einwirkendes Licht und/oder eine Umgebungstemperatur bei dem Endgerät (TER1, TER3) umfasst.

3. Verfahren nach Anspruch 1, **dadurch gekennzeichnet, dass** die mindestens eine Präferenz (P1-P8) anhand eines an der Bedienschnittstelle (S1-S8) (UI) eingegebenen Abrufbefehls zum Abrufen des mindestens einen Dienstes (S1-S8) und/oder anhand von durch das Endgerät (TER1, TER3) angeforderten Daten und/oder anhand der Häufigkeit (FR), mit der der mindestens eine Dienst (S1-S8) abgerufen wird, ermittelt wird.

4. Verfahren nach Anspruch 1, **dadurch gekennzeichnet, dass** zur Ermittlung der mindestens einen Präferenz (P1-P8) und/oder oder im Zusammenhang mit der Ermittlung der mindestens einen Präferenz (P1-P8) die jeweilige Situation des Endgeräts (TER1, TER3) bei der Anforderung oder Nutzung des Dienstes (S1-S8) ermittelt wird, wobei insbesondere mindestens ein Zeitpunkt, zu dem der mindestens eine Dienst (S1-S8) abgerufen wird, und/oder mindestens ein Ort (L1, L2, L3), an dem der mindestens eine Dienst (S1-S8) abgerufen wird, ermittelt wird.

5. Verfahren nach Anspruch 1, **dadurch gekennzeichnet, dass** die Bedienfunktion (BF1-BF3) über einen Bedienknopf (BU1, BU2) und/oder ein Bediensymbol (SY) und/oder ein Bedienmenü (MEN) und/oder eine Auswahlliste (LIS) aktivierbar ist.

6. Verfahren nach Anspruch 1, **dadurch gekennzeichnet, dass** die mindestens eine Präferenz (P1-P8) einem individuellen Nutzerprofil (UP1-UP2) eines einzelnen Nutzers der Bedienschnittstelle (UI) und/oder einem übergeordneten Nutzerprofil (UPA) der Bedienschnittstelle (UI), zugeordnet wird, das mindestens zwei individuellen Nutzern zugeordnet ist.

7. Verfahren nach Anspruch 1, **dadurch gekennzeichnet, dass** die mindestens eine Präferenz (P1-P8) und/oder das mindestens eine Abfragekriterium (R1-R8) in dem Endgerät (TER1, TER3) und/oder auf einem von dem Endgerät (TER1, TER3) entnehmbaren Speichermedium (REM) und/oder einem Server (PFS) abgespeichert wird, bei dem die mindestens eine Präferenz (P1-P8) bzw. das mindestens eine Abfragekriterium (R1-R8) durch das Endgerät (TER1, TER3) abfragbar sind.

8. Verfahren nach Anspruch 1, **dadurch gekennzeichnet, dass** anhand der mindestens einen Präferenz (P1-P8) und/oder anhand des mindestens einen situationsabhängigen Parameters (PTI1-PTI4, PL1, PL2, PL2a) eine zukünftige Präferenz (P1-P8) ermittelt wird, die ein Nutzer des Endgeräts (TER1, TER3) wahrscheinlich haben wird.

9. Verfahren nach Anspruch 1, **dadurch gekennzeichnet, dass** der mindestens eine Dienst (S1-S8) über ein Kommunikationsnetzwerk (NET), insbesondere über das Internet, bereitgestellt wird.

10. Verfahren nach Anspruch 1, **dadurch gekennzeichnet, dass** der mindestens eine Dienst (S1-S8) eine interaktive Bedienung einer von dem Endgerät (TER1, TER3) separaten Einrichtung, insbesondere eines Bezahlsystems (PAY), und/oder das Abfragen von Daten aus einem Speicher (MEM) des Endgeräts (TER1, TER3) und/oder das Abfragen von Daten bei einem das Endgerät (TER1, TER3) bedienenden Server (PFS, CT) umfasst.

11. Verfahren nach Anspruch 1, **dadurch gekennzeichnet, dass** eine erste und mindestens eine zweite, einem ersten und mindestens einem zweiten Dienst (S1, S2) zugeordnete Präferenz (P1, P2) erfasst wird, dass die erste Präferenz (P1) einem ersten Abfragekriterium (R1) für den jeweiligen Dienst (S1) und die mindestens eine zweite Präferenz (P2) mindestens einem zweiten Abfragekriterium (R2) für den jeweiligen Dienst (S2) zugeordnet wird, und dass die Bedienfunktion (BF1) zum Abrufen des jeweiligen Dienstes (S1, S2) an der Bedienschnittstelle (UI) die erste und die mindestens eine zweite Präferenz (P1, P2) nach einem vorbestimmten oder dynamisch ermittelten Sortierkriterium sortiert an der Bedienschnittstelle (UI) bereitstellt.

12. Endgerät zur Nutzung von Diensten (S1-S8), an dem Dienste (S1-S8) über eine Bedienschnittstelle (UI) abrufbar sind, mit Mitteln (CPU, MEM, PRMT) zur Ausführung der Schritte:
- Ermitteln mindestens einer nutzerspezifischen Präferenz (P1-P8) für einen Dienst (S1-S8),
- Zuordnen der mindestens einen Präferenz (P1-P8) zu mindestens einem Abfragekriterium (R1-R8) für den mindestens einen Dienst (S1-S8),
- Anbieten einer Bedienfunktion (BF1-BF3) für die mindestens eine Präferenz (P1-P8) zum Abrufen des mindestens einen Dienstes (S1-S8) an der Bedienschnittstelle (UI) in Abhängigkeit von mindestens einem situationsabhängigen Parameter (PTI1-PTI4, PL1, PL2, PL2a), und
- bei Aktivierung der Bedienfunktion (BF1-BF3) Abrufen des mindestens einen Dienstes (S1-S8) an der Bedienschnittstelle (UI) anhand des mindestens einen Abfragekriteriums (R1-R8).

13. Endgerätemodul zur Nutzung von Diensten (S1-S8) an einem Endgerät (TER1, TER3), an dem Dienste (S1-S8) über eine Bedienschnittstelle (UI) abrufbar sind, wobei das Endgerätemodul (PRMT) von Steuermitteln (CPU) des Endgeräts (TER1, TER3) ausführbaren Programmcode enthält, wobei dieses Endgerät (TER1, TER3) die folgenden Funktionen ausführt,
- Ermitteln mindestens einer nutzerspezifischen Präferenz (P1-P8) für einen Dienst (S1-S8),
- Zuordnen der mindestens einen Präferenz (P1-P8) zu mindestens einem Abfragekriterium (R1-R8) für den mindestens einen Dienst (S1-S8),
- Anbieten einer Bedienfunktion (BF1-BF3) für die mindestens eine Präferenz (P1-P8) zum Abrufen des mindestens einen Dienstes (S1-S8) an der Bedienschnittstelle (UI) in Abhängigkeit von mindestens einem situationsabhängigen Parameter (PTI1-PTI4, PL1, PL2, PL2a), und
- bei Aktivierung der Bedienfunktion (BF1-BF3) Abrufen des mindestens einen Dienstes (S1-S8) an der Bedienschnittstelle (UI) anhand des mindestens einen Abfragekriteriums (R1-R8).

14. Server (PFS) zur Nutzung von Diensten (S1-S8) an einem Endgerät (TER1, TER3), das eine Bedienschnittstelle (UI) zum Abrufen der Dienste (S1-S8) aufweist, mit Mitteln (CPU, MEM, TR, PRMS) zur Bereitstellung von Diensten (S1-S8) an der Bedienschnittstelle (UI) in Interaktion mit dem Endgerät (TER1, TER3), wobei die Mittel (CPU, MEM, TR, PRMS) zur Ausführung der folgenden Schritte ausgestaltet sind:
- Ermitteln mindestens einer nutzerspezifischen Präferenz (P1-P8) für einen Dienst (S1-S8),
- Zuordnen der mindestens einen Präferenz (P1-P8) zu mindestens einem Abfragekriterium (R1-R8) für den mindestens einen Dienst (S1-S8),
- Senden von Instruktionen an das Endgerät (TER1, TER3), anhand derer das Endgerät (TER1, TER3) eine zum Abrufen des mindestens einen Dienstes (S1-S8) vorgesehene Bedienfunktion (BF1-BF3) für die mindestens eine Präferenz (P1-P8) an der Bedienschnittstelle (UI) in Abhängigkeit von mindestens einem situationsabhängigen Parameter (PTI1-PTI4, PL1, PL2, PL2a) anbieten kann.

15. Server nach Anspruch 14, **dadurch gekennzeichnet, dass** die Mittel zum Ermitteln der Präferenz (P1-P8) und/oder zum Senden der Instruktionen für die Bedienfunktion (BF1-BF3) in Abhängigkeit von mindestens einem situationsabhängigen Parameter (PTI1-PTI4, PL1, PL2, PL2a), insbesondere einer Zeitinformation (PTI3, PTI4) über die jeweils aktuelle Zeit und/oder eine Ortsinformation über den jeweils aktuellen Aufenthaltsort (L1, L2, L3) des Endgeräts (TER1, TER3), ausgestaltet sind.

16. Servermodul (PRMS) zur Nutzung von Diensten (S1-S8) an einem Endgerät (TER1, TER3), an dem Dienste (S1-S8) über eine Bedienschnittstelle (UI) abrufbar sind, wobei das Servermodul (PRMS) von Steuermitteln (CPU) des Servers (PFS) ausführbaren Programmcode enthält, so dass der Server (PFS) in Interaktion mit dem Endgerät (TER1, TER3) die folgenden Funktionen ausführt:
- Ermitteln mindestens einer nutzerspezifischen Präferenz (P1-P8) für einen Dienst (S1-S8),
- Zuordnen der mindestens einen Präferenz (P1-P8) zu mindestens einem Abfragekriterium (R1-R8) für den mindestens einen Dienst (S1-S8),
- Senden von Instruktionen an das Endgerät (TER1, TER3), anhand derer das Endgerät (TER1, TER3) eine zum Abrufen des mindestens einen Dienstes (S1-S8) vorgesehene Bedienfunktion (BF1-BF3) für die mindestens eine Präferenz (P1-P8) an der Bedienschnittstelle (UI) in Abhängigkeit von mindestens einem situationsabhängigen Parameter (PTI1-PTI4, PL1, PL2, PL2a) anbieten kann.

17. Speichermittel, insbesondere Diskette oder CD-ROM, Digital Versatile Disc (DVD), Festplattenlaufwerk oder dergleichen, mit einem darauf gespeicherten Endgerätemodul (PRMT) nach Anspruch 13 und/oder mit einem darauf gespeicherten Servermodul (PRMS) nach Anspruch 16.
